# EUROPEAN PATENT APPLICATION

(11) **EP 1 708 351 A2**
(43) Date of publication of application: **04.10.2006**
(21) Application number: 06250548.2
(22) Date of filing: 01.02.2006
(51) Int. Cl.: H02M 7/538

(54) **Control systems for inverters**

(30) Priority: 01.02.2005 GB 0502045
(71) Applicant: Newage International Limited, Stamford, Lincolnshire PE9 2NB (GB)
(72) Inventor: Kransnodebski, Artur, Stamford Lincolnshire PE9 2QF (GB)
(74) Representative: Williams, Michael Ian

(57) **Abstract**

A control system for a DC to AC inverter (26) is disclosed, the control system comprising a reference signal generator for generating a reference signal having a waveform representing a desired output signal, and control means for controlling the inverter such that the waveform at the inverter output substantially corresponds to the waveform of the reference signal. The control means operates at least in part in dependence on the current at the inverter output. The system also includes determining means for determining a measure, such as an RMS value, of the output of the inverter, and adjusting means for adjusting the amplitude of the reference signal in dependence on the measure of the inverter output. This can allow variations in the output of the inverter to be corrected.

## Description

The present invention relates to DC to AC inverters, and in particular to control systems for DC to AC inverters.

DC to AC invertors are used for converting a source of DC power into AC power. The DC power source may produce DC power directly, for example from one or more batteries, or it may be an intermediate DC source produced by rectifying an AC supply for example from an AC generator.

Known DC to AC inverters use a pair of switches per phase to switch a positive and negative DC voltage alternately to an output terminal. The switches are typically controlled by a pulse width modulator (PWM) which controls the width of pulses supplied to the switches in order to produce a desired output signal.

In known inverters a reference signal generator is used in order to generate a reference signal which has a waveform which is substantially the same as the waveform which it is desired to create at the inverter output. A detector detects an actual output signal at the inverter output, and this is compared to the reference signal in order to produce an error signal. A controller receives the error signal and adjusts the output of the PWM such that the instantaneous output of the inverter matches as far as possible the instantaneous value of the reference signal. In this way the output of the inverter can be made to track the reference signal, so that the output waveform is substantially the same as the reference waveform. Under ideal conditions this results in a constant RMS voltage or current at the output.

A problem which has been found in known inverters is that the RMS output may vary in dependence on the load. For example, in systems where the controller controls the output voltage, the RMS output voltage may either decrease or increase in dependence on the size and type of the load. Although in theory the control system should correct the change in output, in practice it has been found that inaccuracies in the control system may result in the change in output not being fully compensated, particularly with large and/or reactive loads. Previous attempts to solve this problem have involved increasing the gain of the control system so as to reduce any inaccuracies. However, increasing the gain of the control system may lead to instability.

According to the present invention there is provided a control system for a DC to AC inverter, the control system comprising:
generating means for generating a reference signal having a waveform representing a desired output signal;
control means for controlling the inverter such that the waveform at the inverter output substantially corresponds to the waveform of the reference signal, the control means operating at least in part in dependence on the current at the inverter output;
determining means for determining a measure of the output of the inverter; and
adjusting means for adjusting the amplitude of the reference signal in dependence on the measure of the inverter output.

The present invention recognises that a change in the output of the inverter (due for example to a change in the size or type of load) can be compensated for by adjusting the amplitude of the reference signal itself. Thus, by providing means for determining a measure of the output of the inverter, and means for adjusting the amplitude of the reference signal in dependence on the measure of the inverter output, a change in the output voltage can be reduced or corrected. The present invention may also allow the gain of the control system to be less than would otherwise be the case, which may reduce the likelihood of instability in the system.

It will be appreciated that, although the control means attempts to ensure that the waveform at the inverter output is the same as that of the reference signal, in practice there will be some deviation due to the latency of the control system and any error therein.

The measure of the inverter output is preferably an average value of the inverter output.

For example the measure of the inverter output may be an RMS value, or some other average value. This can allow a change in the average output of the inverter (due for example to a change in the load) to be reduced or corrected.

Alternatively, the measure of the inverter output may be some other measure, such as peak value, peak to peak value, mean to peak value or an instantaneous value at a predetermined point in the cycle of the output waveform. The measure which is chosen will depend upon which characteristics of the output signal it is desired to correct. Such a value may be measured every cycle or once every few cycles, and the measured value used to adjust the amplitude of the reference signal. An average of a number of instantaneous values may also be used.

Preferably the characteristic of the reference signal which is adjusted is the same as the characteristic of the output signal which the measure represents. Thus, if the measure represents the RMS value at the inverter output, then the RMS value of the reference signal is preferably adjusted by the adjusting means.

The adjusting means may comprise means for generating a second reference signal, and means for comparing the second reference signal with the measure of the inverter output to produce an error signal representing an error in the measure of the inverter output. The adjusting means may further comprise a reference signal control unit for receiving the error signal and producing an adjustment signal for adjusting the reference signal produced by the generating means. The reference signal control unit may comprise at least one of: a proportional regulator; a proportional integral regulator; a proportional differential regulator; or a proportional integral differential regulator.

The reference signal control unit may comprise a limiter for limiting the amount by which the amplitude of the reference signal can be adjusted. This may ensure that large changes in the amplitude of the reference signal do not take place, which may therefore ensure that large changes in the inverter output do not take place. This can help to protect the control system and ensure its stability. For example, the limiter may limit changes to 5% in any one cycle, or some other amount. The limiter may set a limit to the absolute amount by which the amplitude of the reference signal can be adjusted, or it may set a limit to the rate at which it can be adjusted, or both. Either or both limits may be fixed or variable.

The reference signal generator may comprise means for generating an alternating waveform (such as a sine wave), an amplitude generator for generating an amplitude value representing the amplitude of the reference signal, and combining means (such as a multiplier) for combining the alternating waveform with the amplitude value. The adjusting means may be arranged to adjust the amplitude value output by the amplitude generator. For example, the output of the adjusting means may be added to or subtracted from the output of the amplitude generator, or the adjusting means may adjust a control signal supplied to the amplitude generator. Alternatively the adjusting means may be arranged to multiply the reference signal by an appropriate factor.

The control system may further comprise a sensor for sensing a signal at the output of the inverter, and a comparator for comparing the output signal with the reference signal to produce an error signal, and the control means may be arranged to control the inverter in dependence on the value of the error signal. Preferably the sensor, comparator and control means form a feedback loop, and the latency of the feedback loop is smaller than the period of the AC output signal. For example, the latency of the feedback loop may be less than 25% of the period of the output signal, or less than 10%, 5% or 1%. In this way the instantaneous output of the inverter can be made to track the instantaneous value of the reference signal as closely as possible.

In one embodiment, the control system is arranged to control the inverter output voltage, so as to produce an output having a desired voltage waveform. The generating means may therefore be arranged to generate a reference voltage signal, and the measure of the inverter output may be a measure of the voltage at the inverter output. For example, the measure of the voltage may be an average value of the voltage, such as the RMS value.

In the above embodiment the control system may comprise an outer voltage feedback loop and an inner current feedback loop. The current feedback loop may comprise a current sensor, means for comparing the sensed current with a reference current signal, and a current control unit. The reference current signal may be produced by the outer voltage feedback loop. The outer voltage feedback loop may comprise a voltage sensor, a comparator for comparing the sensed voltage with the reference signal, and a control unit for producing the reference current signal. In such an arrangement, the determining means may be arranged to determine the measure of the voltage at the inverter output based on the sensed voltage. For example, if the measure is a measure of the RMS voltage, then the determining means may comprise means for receiving the sensed voltage, and means for determining the RMS voltage therefrom. This can avoid the need to provide a separate voltage sensor.

In another embodiment, the control system is arranged to control the inverter output current, so as to produce an output having a desired current waveform. The generating means may therefore be arranged to generate a reference current signal, and the measure of the inverter output may be a measure of the current at the inverter output. For example, the measure of the current may be an average value of the current, such as the RMS value.

In the above embodiment the control system may further comprise a current sensor for sensing the current at the output of the inverter, and a comparator for comparing the sensed current with the reference current signal to produce an error signal for controlling the inverter. The determining means may be arranged to receive an output of the current sensor and to determine the measure of the current at the inverter output in dependence thereon.

In any of the above arrangements the control means may comprise one or more of: a proportional regulator; a proportional integral regulator; a proportional differential regulator; a proportional integral differential regulator; or any other type of regulator. The control means may be arranged to control the output voltage or the output current, or both. In any of the above arrangements the control means may comprise a pulse width modulator (PWM) for producing pulses with modulated pulse width. The PWM preferably produces an output signal comprising pulses whose width is modulated by the signal it is desired to create at the output of the inverter. The frequency of the output pulses is preferably higher than the frequency of the AC output signal. For example, the frequency of the output pulses may be twice the frequency of the AC output signal, or more, such as more than 10, 20, 50 or 100 times the frequency.

The present invention also provides an inverter comprising a control system in any of the forms described above. The inverter may comprise a pair of switches arranged to switch a positive and negative DC voltage alternately to an output terminal. Where the AC output signal has more than one phase (for example, three phases) a pair of switches may be provided for each phase. The switches may be transistors such as insulated gate bipolar transistors (IGBT), or field effect transistors (FET) or any other type of transistors.

Preferably the inverter also comprises a filter arranged to attenuate frequency components of the output signal at the frequency of the pulses, relative to the fundamental AC output frequency.

The inverter may be used in any situation where it is desired to convert a DC voltage to an AC voltage. For example, the inverter may be used in a generating set comprising an AC generator and an AC to DC converter (such as a rectifier) for producing the DC voltage. Thus, the present invention also provides a generating set comprising an AC generator, an AC to DC converter, a DC to AC inverter, and a control system in any of the forms described above. The generating set may be as described in WO 01/56133 in the name of Newage International Limited, the entire contents of which are incorporated herein by reference.

The present invention also provides a corresponding method, and thus according to another aspect of the invention there is provided a method of controlling a DC to AC inverter, the method comprising the steps of:
generating a reference signal having a waveform representing a desired output signal;
controlling the inverter such that the waveform at the inverter output substantially corresponds to the waveform of the reference signal, the controlling step being carried out at least in part in dependence on the current at the inverter output;
determining a measure of the output of the inverter; and
adjusting the amplitude of the reference signal in dependence on the measure of the inverter output.

Any of the apparatus features may also be provided as method features and *vice versa*.

According to another aspect of the invention there is provided a control system for a DC to AC inverter, the control system comprising:
a reference signal generator which generates a reference signal having a waveform representing a desired output signal;
a control unit which controls the inverter such that the waveform at the inverter output substantially corresponds to the waveform of the reference signal;
a voltage determination unit which determines a measure of the voltage at the inverter output; and
an adjusting unit which adjusts the amplitude of the reference signal in dependence on the measure of the voltage at the inverter output.

The present invention may be implemented in hardware, or as software modules running on a processor, or in any combination of the two.

Preferred features of the present invention will now be described, purely by way of example, with reference to the accompanying drawings, in which:
Figure 1 shows an overview of a DC/AC inverter;
Figure 2 is a block diagram of parts of a DC/AC inverter in accordance with an embodiment of the invention;
Figure 3 shows parts of an inverter in another embodiment of the present invention; and
Figure 4 shows parts of an inverter in a further embodiment of the invention.

WO98/28832 in the name of Newage International Limited, the contents of which hare incorporated herein by reference, discloses a generating set which comprises an engine/generator which provides a variable voltage electrical output, this output being rectified and fed to a DC to DC converter, the output DC voltage of the DC to DC converter being monitored by a control circuit and serving as an intermediate DC output which is fed to a DC to AC inverter to generate an AC output which supplies an external load. The DC to DC converter decouples or isolates the intermediate DC output from the fluctuations in the current and/or voltage output of the generator so that the apparatus is able to accommodate substantial variations in the output of the generator while maintaining the intermediate DC output within desired operating parameters. The DC to DC converter also serves to decouple or isolate the generator from variations in the load. An energy storage device, for example a capacitor, is connected in parallel with the DC link and thereby provides a short term energy reserve when the load applied to the DC link voltage varies suddenly. This energy storage device may be supplemented by other similar devices with respective control systems. In some cases such supplementary energy storage devices may be excluded. Instead a load anticipation circuit may be introduced to cope with high impact or step loads.

The concept of power generation by such a generating set which automatically varies its speed to match load variations at any time is to operate the prime mover at an optimum speed, based on efficiency or fuel economy or low noise or any other desirable parameter, while providing the required engine kW output to satisfy the load demand and any losses in the system. To achieve this, the control circuit includes various electronic controllers which monitor and control the output voltage and current of the inverter and the intermediate DC output or link voltage.

The measurement and control circuit of the generating set disclosed in WO98/28832 monitors the generator output voltage and current together with the DC link voltage and operates through a feedback control loop to vary the speed of the engine so as maintain the DC link voltage constant and limit the generator output current to a level determined a current reference signal.

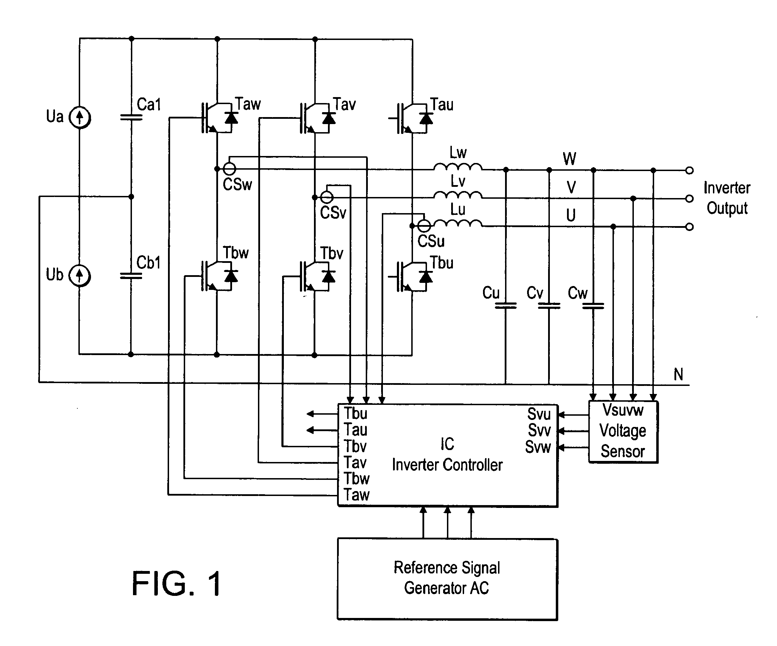

Figure 1 shows an overview of a DC/AC inverter to which the present invention may be applied. Referring to Figure 1, a three phase DC/AC inverter has a power output terminal U,V,W for each phase and a neutral terminal N. The inverter is connected to a DC voltage shown as Ua and Ub in Figure 1. The inverter includes a pair of capacitors Ca1 and Cb1 which are connected in series across the DC voltage.

The AC power output for each phase of the three phase output of the inverter is produced by operation of a respective one of three pairs of transistors Tau and Tbu; Tav and Tbv; and Taw and Tbw which are connected in parallel with one another. The transistors of each pair are series connected by having the emitter of one of that pair connected to the collector of the other of that pair, the series connection between the transistors of each pair being connected to the respective power output terminal U,V,W through a respective inductor Lu, Lv, Lw. Each of the inductors Lu, Lv and Lw is the inductor of an LC filter which is provided for each phase. The capacitor Cu, Cv, Cw of each LC filter is connected between the output line for the respective phase and the neutral.

In the present embodiment each of the transistors Taw, Tbw, Tav, Tbv, Tau and Tbu is an insulated Gate Bipolar Transistor (IGBT) and has an inverse parallel diode connected across its emitter and collector junctions (diode cathode to collector, diode anode to emitter). Other forms of transistor such as FETS could be used.

A voltage sensor VSuvw senses the output voltage of each of the AC power outputs for each phase U, V and W with respect to the neutral line N. The voltage sensor VSuvw has three outputs which are fed to respective inputs of an Inverter controller IC, which also receives the three output signals from current sensors CSu, CSv and CSw at respective ones of three further inputs. The Inverter controller IC also receives three reference signals, representing the required value of output frequency and voltage, which are provided by a reference signal generator.

The inverter controller IC uses the inductor (choke) currents measured by the current sensors CSu, CSv and CSw to produce a feedback signal for current regulation. The inverter controller IC has six outputs Taw, Tbw, Tav, Tbv, Tau and Tbu, which are each connected to the base of a respective one of the output transistors Taw, Tbw, Tav, Tbv, Tau and Tbu. The inverter controller IC thereby operates to control operation of the transistors Taw, Tbw, Tav, Tbv, Tau and Tbu of the inverter by pulse width modulation.

The DC/AC pulse width modulated inverter produces a sinusoidal three phase voltage for symmetrical and non-symmetrical loads. The output voltage of each phase U,V,W is individually modulated by the Inverter Controller IC.

Although Figure 1 shows a three phase inverter, the present invention can be applied to a single phase inverter, or an inverter having any other number of phases. Furthermore, although Figure 1 shows an inverter with current control and voltage control, either current control alone or voltage control alone could be used.

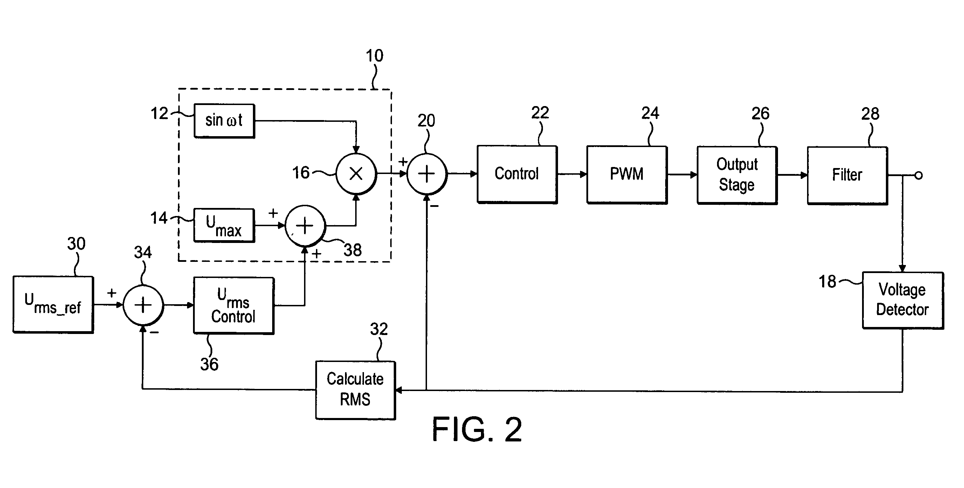

Figure 2 is a block diagram of parts of a DC/AC inverter in accordance with one embodiment. For simplicity, only a single phase is shown. Referring to Figure 2, the inverter comprises a reference voltage signal generator 10 which generates a reference voltage signal which has a waveform which is substantially the same as the waveform which it is desired to create at the inverter output. In this example the desired output waveform is a sine wave having a frequency ω and a peak voltage Uₘₐₓ, and the reference signal generator therefore comprises a sine wave generator 12 which generates a sine wave of frequency ω, and an amplitude generator 14 which generates an amplitude value of Uₘₐₓ. The sine wave and amplitude value are combined in multiplier 16 to produce the reference signal.

A voltage sensor 18 measures an instantaneous voltage at the output of the inverter. The instantaneous value of the output voltage is compared to the instantaneous value of the reference voltage in comparator 20. The output of comparator 20 is thus an error signal representing a difference between the actual instantaneous output of the inverter and a desired output of the inverter.

The error signal is fed to control unit 22, which processes the error signal in order to produce a control signal. Control unit 22 may be, for example, a proportional (P) regulator, a proportional integral (PI) regulator, a PD (proportional and derivative) regulator or a proportional integral derivative (PID) regulator, or any other type of regulator, as appropriate. Regulators of these types are known in the art and thus are not described further.

The control signal output from control unit 22 is fed to PWM 24. PWM 24 produces a relatively high frequency pulsed signal which is pulse width modulated with the waveform that it is desired to produce at the inverter output. The pulse width modulated signal is used to drive switches in the output stage 26 in order to produce an AC voltage. The AC voltage is filtered in filter 28 in order to remove the high frequency component present in the pulse width modulated signal, and thereby to produce the AC output signal.

It will be appreciated that the task of the control unit 22 is to ensure that the instantaneous voltage at the output of the inverter tracks the instantaneous voltage of the reference signal as closely as possible. In this way the shape of the inverter output voltage is made substantially the same as the shape of the reference signal.

In addition to the elements which have been described above, the inverter also comprises RMS (root mean square) reference voltage generator 30, RMS calculation unit 32, adder 34, RMS control unit 36, and adder 38. In operation, RMS reference voltage generator 30 produces an RMS reference voltage which is the desired RMS voltage at the inverter output. RMS calculation unit 32 calculates an RMS value of the actual inverter output voltage. The calculated value of the RMS voltage is compared to the reference voltage in comparator 34. The output of comparator 34 is thus an error signal which indicates how far the actual RMS output voltage deviates from the reference RMS voltage.

The error signal output from comparator 34 is fed to RMS control unit 36, which processes the error signal in order to produce an RMS correction signal. The RMS correction signal output from the control unit 36 is fed to adder 38, where it is added to the output of amplitude generator 14. Thus the output of the RMS control unit 36 modifies the output of amplitude generator 14 in dependence on the difference between the desired RMS voltage and the actual RMS voltage at the inverter output. In this way the peak value of the reference voltage itself is adjusted in dependence on the difference between the desired RMS voltage and the actual RMS voltage.

In the circuit of Figure 2, if the RMS output voltage starts to fall due to an increase in the load applied to the inverter, then the peak to peak value of the reference signal is increased by a corresponding amount, which in turn causes the RMS output voltage to increase due to the action of the control unit 22. Similarly, if the RMS output voltage increases, then the peak to peak value of the reference signal is decreased by a corresponding amount, which in turn causes the RMS output voltage to decrease. Thus, by providing the RMS voltage feedback loop, changes in the RMS output voltage can be corrected or reduced. By adjusting the peak value of the reference voltage, this can be achieved without increasing the gain of the control system.

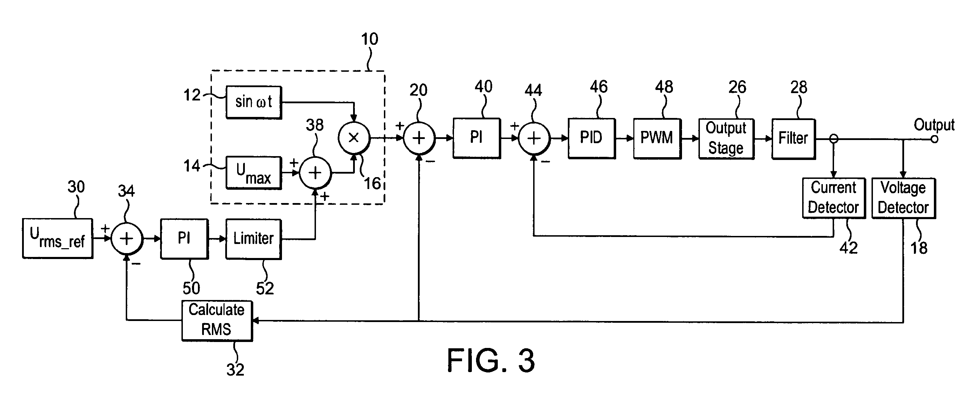

Figure 3 shows parts of an inverter in another embodiment. In the inverter of Figure 3 an inner current control loop is provided to control the inductor (choke) current directly. In Figure 3, parts of the inverter which are in common with the inverter shown in Figure 2 are given the same reference numeral and are not described further.

Referring to Figure 3, PI regulator 40 receives a voltage error signal from adder 20, which error signal represents the difference between the instantaneous actual output voltage and the instantaneous reference voltage. PI regulator 40 acts on the voltage error signal to produce an output signal which is, in effect, a signal indicating the amount of current that is needed in the inductor of the inverter to achieve the desired output voltage.

A current sensor 42 senses the current in the inductor of the inverter. The sensed current is compared to the output of PI regulator 40 in comparator 44. The output of comparator 44 is thus a current error signal indicating an error in the current in the inductor. The output of comparator 44 is fed to PID regulator 46. PID regulator 46 acts on the current error signal using proportional terms, integral terms, and differential terms to produce an output signal which is a control signal for PWM 48.

PWM 48 produces a pulsed signal at a relatively high frequency which is pulse width modulated with the signal which it is desired to produce at the inverter output. For example, the pulse frequency may be 15kHz, and it may be modulated with a 50 or 60 Hz sine wave having a 311 V peak voltage (220V RMS). The pulse width modulated signal is supplied to the switches in the output stage 26 in order to switch the DC signal to produce an AC output signal in the manner described above with reference to Figure 1.

The inverter shown in Figure 3 also includes PI regulator 50 and limiter 52, which are part of the feedback loop which controls the peak value of the reference voltage. PI regulator 50 acts on the RMS error signal output from comparator 34 using proportional terms and integral terms to produce the RMS correction signal. Limiter 52 ensures that the value of the RMS correction signal does not exceed certain limits, which may be fixed or variable. The output of limiter 52 is fed to adder 38, in order to add the RMS correction signal to the peak reference voltage in the way described above with reference to Figure 2.

In Figure 3, any of PI regulator 40, PID regulator 46 and PI regulator 50 may be replaced with a P regulator, a PI regulator, a PD regulator or a PID regulator, or indeed with any other type of regulator, as appropriate.

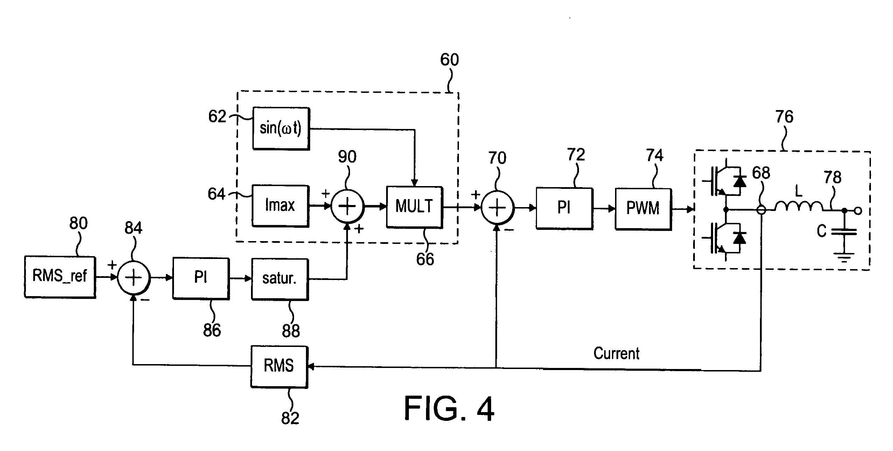

Figure 4 shows parts of an inverter in a further embodiment. The inverter shown in Figure 4 makes use of an RMS current controller in order to regulate the RMS current at the output of the inverter. Regulation of the RMS current may be required, for example, when a generating apparatus is in a grid connection mode where current is being injected into a grid.

Referring to Figure 4, the inverter comprises a reference current signal generator 60 which generates a reference current signal which has a waveform which is substantially the same as the waveform which it is desired to create at the inverter output. In this example the desired output waveform is a sine wave having a frequency ω and a peak voltage Uₘₐₓ, and the reference signal generator therefore comprises a sine wave generator 62 which generates a sine wave of frequency ω, and an amplitude generator 64 which generates an amplitude value of Uₘₐₓ. The sine wave and amplitude value are combined in multiplier 66 to produce the reference signal.

A current sensor 68 measures an instantaneous current at the output of the inverter. The instantaneous value of the output current is compared to the instantaneous value of the reference current in comparator 70. The output of comparator 70 is thus an error signal representing a difference between the actual instantaneous current output of the inverter and a desired current output of the inverter.

The error signal is fed to control unit 72, which processes the error signal in order to produce a control signal. In this embodiment control unit 72 is a proportional integral (PI) regulator, although it may be, for example, a proportional (P) regulator, a PD (proportional and derivative) regulator or a proportional integral derivative (PID) regulator, or any other type of regulator, as appropriate.

The control signal output from control unit 72 is fed to PWM 74. PWM 74 produces a relatively high frequency pulsed signal which is pulse width modulated with the waveform that it is desired to produce at the inverter output. The pulse width modulated signal is used to drive switches in the output stage 76 in order to produce an AC output. The AC output is filtered by LC filter 78 in order to remove the high frequency component present in the pulse width modulated signal, and thereby to produce the AC output signal.

In this embodiment the task of the control unit 72 is to ensure that the instantaneous current at the output of the inverter tracks the instantaneous value of the reference signal as closely as possible. In this way the shape of the inverter output current is made substantially the same as the shape of the reference signal.

The inverter also comprises RMS (root mean square) current reference generator 80, RMS calculation unit 82, adder 84, RMS control unit 86, limiter 88 and adder 90. In operation, RMS current reference generator 80 produces an RMS reference signal which represents the desired RMS current at the inverter output. RMS calculation unit 82 calculates an RMS value of the actual inverter output current. The calculated value of the RMS current is compared to the current reference signal in comparator 84. The output of comparator 84 is thus an error signal which indicates how far the actual RMS output current deviates from the reference RMS current.

The error signal output from comparator 84 is fed to RMS control unit 86, which processes the error signal in order to produce an RMS correction signal. The RMS correction signal output from the control unit 86 is fed to limiter 88. Limiter 88 ensures that the value of the RMS correction signal does not exceed certain limits, which may be fixed or variable. The output of limiter 88 is fed to adder 90, where it is added to the output of amplitude generator 64. Thus the output of the RMS control unit 86 modifies the output of amplitude generator 64 in dependence on the difference between the desired RMS current and the actual RMS current at the inverter output.

In the circuit of Figure 4, if the RMS output current starts to fall, then the peak to peak value of the reference signal is increased by a corresponding amount, which in turn causes the RMS output current to increase due to the action of the control unit 72. Similarly, if the RMS output current increases, then the peak to peak value of the reference signal is decreased by a corresponding amount, which in turn causes the RMS output current to decrease. Thus, by providing the RMS current feedback loop, changes in the RMS output current can be corrected or reduced. By adjusting the peak value of the reference current, this can be achieved without increasing the gain of the control system.

Any of the inverters described above can be used as part of a generating system such as that described in WO 01/56133 or WO98/28832 referred to above.

## Claims

1. A control system for a DC to AC inverter, the control system comprising:
generating means for generating a reference signal having a waveform representing a desired output signal;
control means for controlling the inverter such that the waveform at the inverter output substantially corresponds to the waveform of the reference signal, the control means operating at least in part in dependence on the current at the inverter output;
determining means for determining a measure of the output of the inverter; and
adjusting means for adjusting the amplitude of the reference signal in dependence on the measure of the inverter output.

2. A control system according to claim 1, wherein the measure of the inverter output is an average value of the inverter output.

3. A control system according to claim 1 or 2, wherein the adjusting means comprises means for generating a second reference signal, and means for comparing the second reference signal with the measure of the inverter output to produce an error signal representing an error in the measure of the inverter output.

4. A control system according to claim 3, wherein the adjusting means further comprises a reference signal control unit for receiving the error signal and producing an adjustment signal for adjusting the reference signal produced by the generating means.

5. A control system according to claim 4, wherein the reference signal control unit comprises at least one of: a proportional regulator; a proportional integral regulator; a proportional differential regulator; or a proportional integral differential regulator.

6. A control system according to claim 4 or 5, wherein the reference signal control unit comprises a limiter for limiting the amount by which the amplitude of the reference signal can be adjusted.

7. A control system according to any of the preceding claims, further comprising:
a sensor for sensing a signal at the output of the inverter; and
a comparator for comparing the output signal with the reference signal to produce an error signal;
wherein the control means is arranged to control the inverter in dependence on the value of the error signal.

8. A control system according to claim 7, wherein the sensor, comparator and control means form a feedback loop, and the latency of the feedback loop is smaller than the period of the AC output signal.

9. A control system according to any of the preceding claims, wherein the generating means is arranged to generate a reference voltage signal, and the measure of the inverter output is a measure of the voltage at the inverter output.

10. A control system according to any of the preceding claims, wherein the control system comprises an outer voltage feedback loop and an inner current feedback loop.

11. A control system according to claim 10, wherein the current feedback loop comprises a current sensor, means for comparing the sensed current with a reference current signal, and a current control unit.

12. A control system according to claim 11, wherein the reference current signal is produced by the outer voltage feedback loop.

13. A control system according to claim 12, wherein the outer voltage feedback loop comprises a voltage sensor, a comparator for comparing the sensed voltage with the reference signal, and a control unit for producing the reference current signal.

14. A control system according to any of claims 1 to 8, wherein the generating means is arranged to generate a reference current signal, and the measure of the inverter output is a measure of the current at the inverter output.

15. A control system according to claim 14, further comprising a current sensor for sensing the current at the output of the inverter, and a comparator for comparing the sensed current with the reference current signal to produce an error signal for controlling the inverter.

16. A control system according to claim 15, wherein the determining means is arranged to receive an output of the current sensor and to determine the measure of the current at the inverter output in dependence thereon.

17. A control system according to any of the preceding claims, wherein the control means comprise one or more of: a proportional regulator; a proportional integral regulator; a proportional differential regulator; a proportional integral differential regulator; or any other type of regulator.

18. A control system according to any of the preceding claims, wherein the control means comprises a pulse width modulator (PWM) for producing pulses with modulated pulse width.

19. An inverter comprising a pair of switches arranged to switch a positive and negative DC voltage alternately to an output terminal, and a control system according to any of the preceding claims.

20. A generating apparatus comprising an AC generator, an AC to DC converter, an inverter, and a control system according to any of claims 1 to 18.

21. A method of controlling a DC to AC inverter, the method comprising the steps of:
generating a reference signal having a waveform representing a desired output signal;
controlling the inverter such that the waveform at the inverter output substantially corresponds to the waveform of the reference signal, the controlling step being carried out at least in part in dependence on the current at the inverter output;
determining a measure of the output of the inverter; and
adjusting the amplitude of the reference signal in dependence on the measure of the inverter output.
